# EUROPEAN PATENT APPLICATION

(11) **EP 2 587 433 A1**
(43) Date of publication of application: **01.05.2013**
(21) Application number: 12186673.5
(22) Date of filing: 28.09.2012
(51) Int. Cl.: G06Q 20/32

(54) **Mobile terminal**

(30) Priority: 27.10.2011 KR 20110110259
(71) Applicant: LG Electronics, Seoul, 150-721 (KR)
(72) Inventor: Chi, Jumin, 153-801 Seoul (KR)
(74) Representative: TER MEER - STEINMEISTER & PARTNER GbR

(57) **Abstract**

A mobile terminal is disclosed. The mobile terminal can comprise a memory; a display module; a wireless communication unit carrying out a short range wireless communication function with a payment device; and a controller storing in the memory payment information created as short range wireless communication is carried out with the payment device, creating a first graphic object representing at least part of the payment information, and displaying the first graphic object on the display module by mapping the first graphic object into a pre-stored map based on a payment location included in the payment information.

## Description

This application claims the benefit of Korean Patent Application No. 10-2011-0110259 filed on October 27, 2011 which are hereby incorporated by reference.

### BACKGROUND

The present invention relates to a mobile terminal. More specifically, the present invention relates to a mobile terminal capable of carrying out payment by using a short range wireless communication technology and visually providing information related to payment carried out by using the short range wireless communication technology.

### Related Art

As the functions of terminals such as personal computers, laptop computers, cellular phones, smart phones, and the like are diversified, the terminals are constructed in the form of a multimedia player having multiple functions of capturing pictures or moving images, playing music and video files, playing games, and receiving broadcasting programs.

To support and enhance functions of a terminal, it can be considered to improve a structural part and/or a software part of the terminal. A variety of recent terminals including mobile terminals provide more complex menu structure as multi-functional functions and various functions are incorporated therein.

In particular, these days interest in a payment technology using a short range wireless communication technology such as NFC (Near Field Communication) is growing fast and commercialization thereof is proceeding rapidly.

### SUMMARY

A mobile terminal according to the present invention can carry out payment by using a short range wireless communication technology, in particular by using coupons stored inside the mobile terminal.

Also, a mobile terminal according to the present invention can carry out a function of recommending coupons based on a location at which payment has been performed by using a short range communication technology.

In addition, a mobile terminal according to the present invention can limit a payment process making use of a short range communication technology if particular conditions are met.

To solve the technical problem, a mobile terminal according to an embodiment of the present invention comprises a memory, a display module, a wireless communication unit, and a controller. The wireless communication unit can carry out a function of short range wireless communication to and from a payment device. The controller can store payment information created based on short range wireless communication with the payment device, create a first graphic object representing at least part of the payment information, and display on the display module the first graphic object by mapping the first graphic object into a map pre-stored based on a payment location included in the payment information.

To solve the technical problem, a mobile terminal according to another embodiment of the present invention can comprise a memory, a wireless communication unit, and a controller. The memory can store a plurality of coupons. The wireless communication unit can establish a short range wireless communication link between a payment device and tags recognized within an effective communication range. The controller can search the plurality of coupons for a coupon that can be used for payment based on payment related information communicated through the short range wireless communication link and perform the payment by using the searched coupon.

To solve the technical problem, a mobile terminal according to yet another embodiment of the present invention can comprise a display module, a wireless communication unit, and a controller. The wireless communication unit can establish a short range wireless communication link with a payment device and form a wireless communication link with a network device providing coupons. If predetermined type of payment is carried out by using a payment device recognized within an effective communication range through the short range wireless communication link, the controller can receive, through the payment device or the network device, information related to coupons that can be used within a range predetermined with respect to a location at which the payment has been performed; and is configured to display on the display module information related to the coupons by mapping the information related to the coupons to a pre-stored map.

To solve the technical problem, a mobile terminal according to still another embodiment of the present invention can comprise a memory, a wireless communication unit, and a controller. The memory can store predetermined payment restriction conditions. The wireless communication unit can establish a short range wireless communication link with a payment device recognized within an effective communication range. The controller can carry out a predetermined authentication process if payment related information communicated through the short range wireless communication link corresponds to the predetermined payment restriction conditions.

### BRIEF DESCRIPTION OF THE DRAWINGS

The accompany drawings, which are included to provide a further understanding of this document and are incorporated on and constitute a part of this specification illustrate embodiments of this document and together with the description serve to explain the principles of this document.

FIG. 1 is a block diagram of a mobile terminal according to an embodiment of the present invention;

FIG. 2 is a flow diagram illustrating a method for providing information about payment carried out a mobile terminal according to the present invention;

FIG. 3 illustrates one example where payment information is displayed on a mobile terminal according to the present invention as a result of carrying out a method for providing payment information illustrated in FIG. 2;

FIG. 4 illustrates another example where payment information is displayed on a mobile terminal according to the present invention as a result of carrying out a method for providing payment information illustrated in FIG. 2;

FIG. 5 illustrates yet another example where payment information is displayed on a mobile terminal according to the present invention as a result of carrying out a method for providing payment information illustrated in FIG. 2;

FIG. 6 illustrates an area magnified for setting a unit period by which payment information provided by a mobile terminal according to the present invention illustrated in FIG. 5 is displayed;

FIG. 7 are examples of graphic objects illustrating payment related information provided by a mobile terminal according to the present invention;

FIG. 8 illustrates a case where, if payment related information displayed on a mobile terminal according to the present invention is selected as a result of carrying out a method for providing payment related information illustrated in FIG. 2, details of payment related information are displayed on the mobile terminal;

FIG. 9 is a flow diagram illustrating another example of a method for providing payment information carried out a mobile terminal according to the present invention;

FIG. 10 illustrates a procedure of setting a remind function of a coupon stored in a mobile terminal according to the present invention;

FIG. 11 is a flow diagram illustrating one example of a payment method using a short range wireless communication technology carried out in a mobile terminal according to the present invention;

FIG. 12 is one example of a payment method using short range wireless communication method illustrated in FIG. 11;

FIG. 13 shows coupons applicable for payment through a mobile terminal according to the present invention, the coupons displayed according to a payment method using a short range wireless communication technology illustrated in FIG. 12;

FIG. 14 is a flow diagram illustrating another example of a payment method using a short range wireless communication technology carried out in a mobile terminal according to the present invention;

FIG. 15 illustrates one example of a procedure for carrying out a payment method using a short range wireless communication technology illustrated in FIG. 14;

FIG. 16 illustrates one example of a procedure for transmitting a coupon stored in a mobile terminal according to the present invention to an external device;

FIG. 17 is a flow diagram illustrating one example of a method for recommending a coupon at the time of carrying out payment based on a short range wireless communication technology, which is carried out in a mobile terminal according to the present invention;

FIG. 18 illustrates a procedure for displaying detailed information about a selected coupon on a mobile terminal according to the present invention if information related to the coupon displayed on the mobile terminal is selected as a result of carrying out a method for recommending a coupon illustrated in FIG. 17;

FIG. 19 is a flow diagram illustrating another example of a method for recommending a coupon at the time of carrying out payment based on a short range wireless communication technology, which is carried out in a mobile terminal according to the present invention;

FIG. 20 illustrates one example of a method for recommending a coupon of FIG. 19 carried out based on NFC;

FIG. 21 is a flow diagram illustrating one example of a method for restricting payment using a short range wireless communication technology in a mobile terminal according to the present invention;

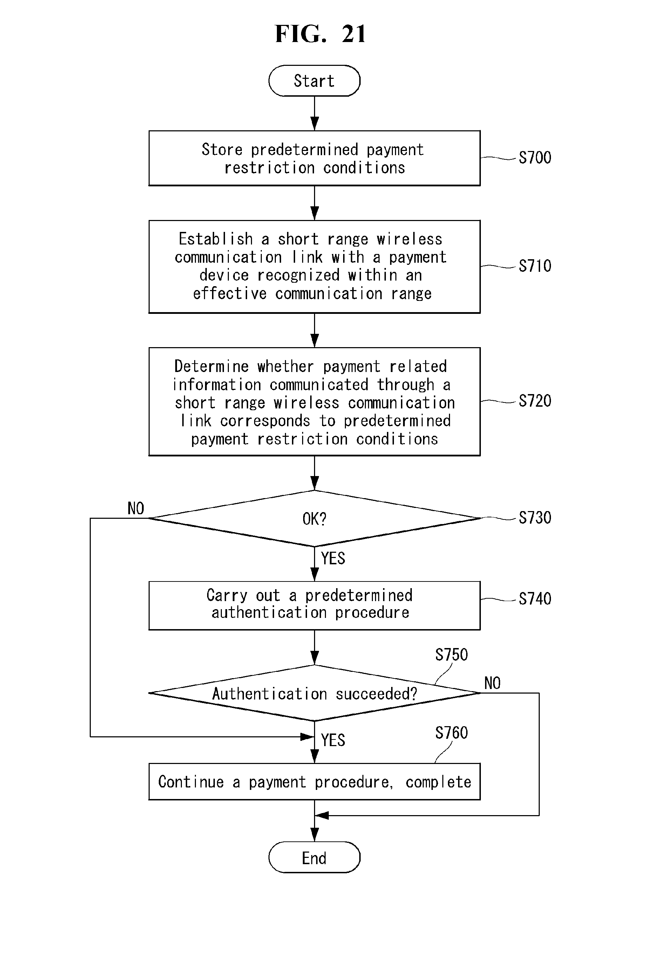

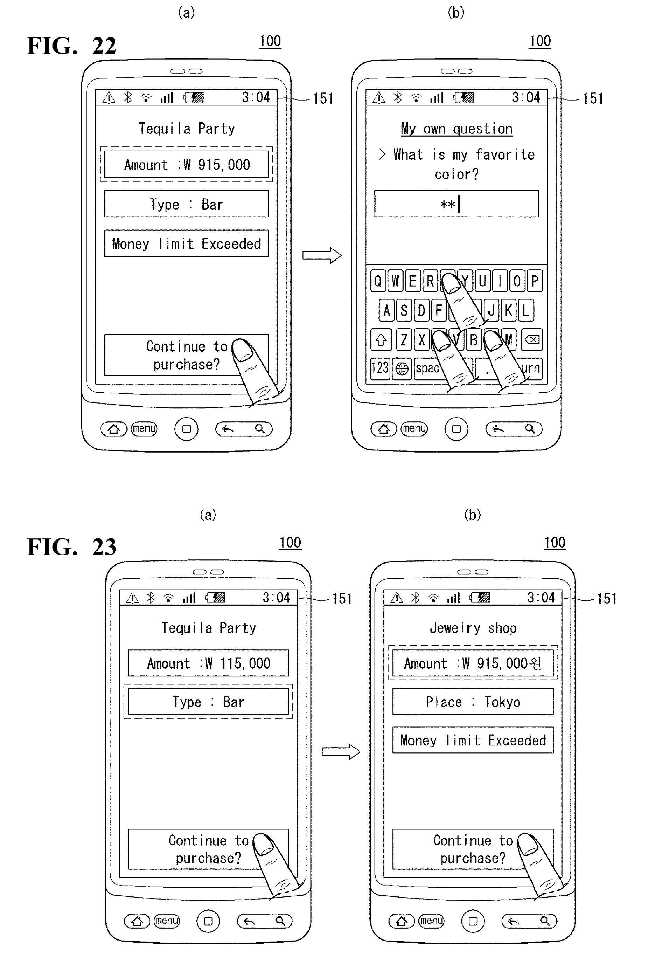

; FIG. 22 illustrates one example where a user authentication procedure is performed in a mobile terminal of the present invention according to a method of restricting payment illustrated in FIG. 21

FIG. 23 illustrates cases where user authentication is needed according to a method for restricting payment illustrated in FIG. 21;

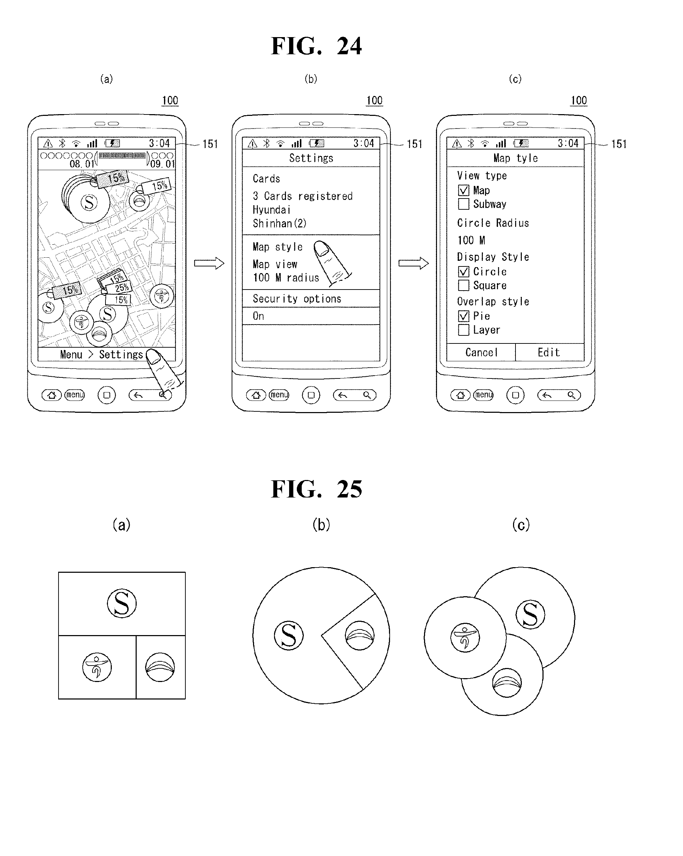

FIG. 24 illustrates a procedure for setting payment related information provided for the user by a mobile terminal according to the present invention; and

FIG. 25 illustrates examples of payment related information types displayed on a display module in a mobile terminal according to the present invention.

### DETAILED DESCRIPTION

The present invention will now be described more fully with reference to the accompanying drawings, in which exemplary embodiments of the invention are shown. The invention may, however, be embodied in many different forms and should not be construed as being limited to the embodiments set forth herein; rather, there embodiments are provided so that this disclosure will be thorough and complete, and will fully convey the concept of the invention to those skilled in the art.

Hereinafter, a mobile terminal relating to the present invention will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

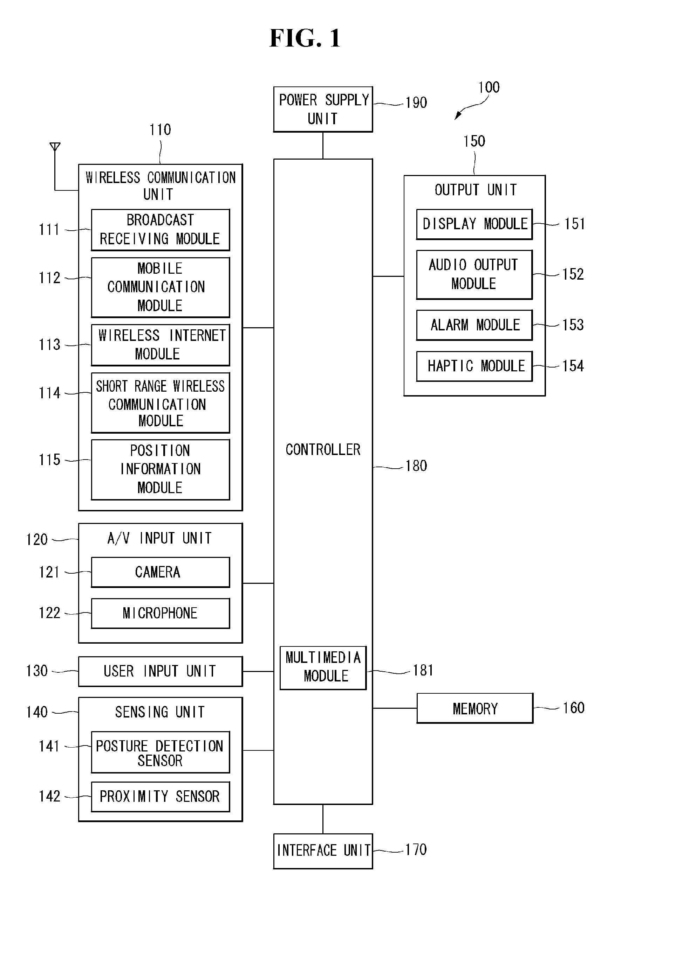

FIG. 1 is a block diagram of an implementation of a mobile terminal 100. The mobile terminal 100 can include a wireless communication unit 110, an audio/video (A/V) input unit 120, a user input unit 130, a sensing unit 140, an output unit 150, a memory 160, an interface 170, a controller 180, and a power supply 190. The components shown in FIG. 1 are not essential parts and the number of components included in the mobile terminal can be varied.

The components of the mobile terminal will now be described.

The wireless communication unit 110 can include at least one module that enables radio communication between the mobile terminal 100 and a radio communication system or between the mobile terminal 100 and a network in which the mobile terminal 100 is located. For example, the wireless communication unit 110 can include a broadcasting receiving module 111, a mobile communication module 112, a wireless Internet module 113, a short range wireless communication module 114 and a position information module 115.

The broadcasting receiving module 111 receives broadcasting signals and/or broadcasting related information from an external broadcasting management server through a broadcasting channel.

The broadcasting channel can include a satellite channel and a terrestrial channel. The broadcasting management server can be a server that generates and transmits broadcasting signals and/or broadcasting related information or a server that receives previously created broadcasting signals and/or broadcasting related information and transmits the broadcasting signals and/or broadcasting related information to a terminal. The broadcasting signals can include not only TV broadcasting signals, radio broadcasting signals and data broadcasting signals but also signals in the form of combination of a TV broadcasting signal and a radio broadcasting signal.

The broadcasting related information can be information on a broadcasting channel, a broadcasting program or a broadcasting service provider. The broadcasting related information can be provided even through a mobile communication network. In this case, the broadcasting related information can be received by the mobile communication module 112.

The broadcasting related information can exist in various forms. For example, the broadcasting related information can exist in the form of electronic program guide (EPG) of digital multimedia broadcasting (DMB) or in the form of electronic service guide (ESG) of digital video broadcast-handheld (DVB-H).

The broadcasting receiving module 111 receives broadcasting signals using various broadcasting systems. Particularly, the broadcasting receiving module 111 can receive digital broadcasting signals using digital broadcasting systems such as digital multimedia broadcasting-terrestrial (DMB-T), digital multimedia broadcasting-satellite (DMB-S), media forward link only (MediaFLO), DVB-H and integrated services digital broadcast-terrestrial (ISDB-T) systems. The broadcasting receiving module 111 can be constructed to be suited to broadcasting systems providing broadcasting signals other than the above-described digital broadcasting systems.

The broadcasting signals and/or broadcasting related information received through the broadcasting receiving module 111 can be stored in the memory 160. The mobile communication module 112 transmits/receives a radio signal to/from at least one of a base station, an external terminal and a server on a mobile communication network. The radio signal can include a voice call signal, a video telephony call signal or data in various forms according to transmission and receiving of text/multimedia messages.

The wireless Internet module 113 means a module for wireless Internet access and can be included in the mobile terminal 100 or externally attached to the mobile terminal 100. Wireless LAN (WLAN) (Wi-Fi), wireless broadband (Wibro), world interoperability for microwave access (Wimax), high speed downlink packet access (HSDPA) and so on can be used as a wireless Internet technique.

The short range wireless communication module 114 means a module for short range wireless communication. Bluetooth, radio frequency identification (RFID), infrared data association (IrDA), ultra wideband (UWB), near field communication(NFC) and ZigBee can be used as a local area communication technique.

The position information module 115 confirms or obtains the position of the mobile terminal. A global positioning system (GPS) module is a representative example of the position information module 115. According to the current technology, the GPS module 115 can calculate information on distances between one point (object) and at least three satellites and information on the time when the distance information is measured and apply trigonometry to the obtained distance information to obtain three-dimensional position information on the point (object) according to latitude, longitude and altitude at a predetermined time.

Furthermore, a method of calculating position and time information using three satellites and correcting the calculated position and time information using another satellite is also used. In addition, the GPS module 115 continuously calculates the current position in real time and calculates velocity information using the position information.

Referring to FIG. 1, the A/V input unit 120 is used to input an audio signal or a video signal and can include a camera 121 and a microphone 122. The camera 121 processes image frames of still images or moving images obtained by an image sensor in a video telephony mode or a photographing mode. The processed image frames can be displayed on a display module 151.

The image frames processed by the camera 121 can be stored in the memory 160 or transmitted to an external device through the wireless communication unit 110. The mobile terminal 100 can include at least two cameras according to constitution of the terminal.

The microphone 122 receives an external audio signal in a call mode, a recording mode or a speed recognition mode and processes the received audio signal into electric audio data. The audio data can be converted into a form that can be transmitted to a mobile communication base station through the mobile communication module 112 and output in the call mode. The microphone 122 can employ various noise removal algorithms for removing noise generated when the external audio signal is received.

The user input unit 130 receives input data for controlling the operation of the terminal from a user. The user input unit 130 can include a keypad, a dome switch, a touch pad (constant voltage/capacitance), jog wheel, jog switch and so on.

The sensing unit 140 senses the current state of the mobile terminal 100, such as open/close state of the mobile terminal 100, the position of the mobile terminal 100, whether a user touches the mobile terminal 100, the direction of the mobile terminal 100 and acceleration/deceleration of the mobile terminal 100 and generates a sensing signal for controlling the operation of the mobile terminal 100. For example, the sensing unit 140 can sense whether a slide phone is opened or closed when the mobile terminal 100 is the slide phone. Furthermore, the sensing unit 140 can sense whether the power supply 190 supplies power and whether the interface 170 is connected to an external device. The sensing unit 140 can include a proximity sensor.

The output unit 150 generates visual, auditory or tactile output and can include the display module 151, an audio output module 152, an alarm module 153 and a haptic module 154.

The display module 151 displays information processed by the mobile terminal 100. For example, the display module 151 displays UI or graphic user interface (GUI) related to a telephone call when the mobile terminal is in the call mode. The display module 151 displays a captured or/and received image, UI or GUI when the mobile terminal 100 is in the video telephony mode or the photographing mode.

The display module 151 can include at least one of a liquid crystal display, a thin film transistor liquid crystal display, an organic light-emitting diode display, a flexible display and a three-dimensional display.

Some of these displays can be of a transparent type or a light transmission type. This can be referred to as a transparent display. The transparent display includes a transparent liquid crystal display. The rear structure of the display module 151 can also be of the light transmission type. According to this structure, a user can see an object located behind the body of the mobile terminal 100 through an area of the body of the mobile terminal 100, which is occupied by the display module 151.

The mobile terminal 100 can include at least two display modules 151 according to constitution of the terminal. For example, the mobile terminal 100 can include a plurality of displays that are arranged on a single face at a predetermined distance or integrated. Otherwise, the plurality of displays can be arranged on different sides.

In the case where the display module 151 and a sensor sensing touch (referred to as a touch sensor hereinafter) form a layered structure, which is referred to as a touch screen hereinafter, the display module 151 can be used as an input device in addition to an output device. The touch sensor can be in the form of a touch film, a touch sheet and a touch pad, for example.

The touch sensor can be constructed such that it converts a variation in pressure applied to a specific portion of the display module 151 or a variation in capacitance generated at a specific portion of the display module 151 into an electric input signal. The touch sensor can be constructed such that it can sense pressure of touch as well as the position and area of touch.

When touch input is applied to the touch sensor, a signal corresponding to the touch input is transmitted to a touch controller. The touch controller processes the signal and transmits data corresponding to the processed signal to the controller 180. Accordingly, the controller 180 can detect a touched portion of the display 151.

Referring to FIG. 1, the proximity sensor 141 can be located in an internal region of the mobile terminal, surrounded by the touch screen, or near the touch screen. The proximity sensor senses an object approaching a predetermined sensing face or an object located near the proximity sensor using electromagnetic force or infrared rays without having mechanical contact. The proximity sensor has lifetime longer than that of a contact sensor and has wide application.

The proximity sensor includes a transmission type photo-electric sensor, a direct reflection type photo-electric sensor, a mirror reflection type photo-electric sensor, a high-frequency oscillating proximity sensor, a capacitive proximity sensor, a magnetic proximity sensor, an infrared proximity sensor, etc.

A capacitive touch screen is constructed such that proximity of a pointer is detected through a variation in an electric field according to the proximity of the pointer. In this case, the touch screen (touch sensor) can be classified as a proximity sensor.

For convenience of explanation, an action of approaching the pointer to the touch screen while the pointer it not being in contact with the touch screen such that location of the pointer on the touch screen is recognized is referred to as "proximity touch" and an action of bring the pointer into contact with the touch screen is referred to as "contact touch" in the following description. A proximity touch point of the pointer on the touch screen means a point of the touch screen to which the pointer corresponds perpendicularly to the touch screen when the pointer proximity-touches the touch screen.

The proximity sensor senses proximity touch and a proximity touch pattern (for example, a proximity touch distance, a proximity touch direction, a proximity touch velocity, a proximity touch time, a proximity touch position, a proximity touch moving state, etc.). Information corresponding to the sensed proximity touch action and proximity touch pattern can be displayed on the touch screen.

The audio output module 152 can output audio data received from the wireless communication unit 110 or stored in the memory 160 in a call signal receiving mode, a telephone call mode or a recording mode, a speech recognition mode and a broadcasting receiving mode. The audio output module 152 outputs audio signals related to functions (for example, a call signal incoming tone, a message incoming tone, etc.) performed in the mobile terminal 100. The audio output module 152 can include a receiver, a speaker, a buzzer, etc.

The alarm module 153 outputs a signal for indicating generation of an event of the mobile terminal 100. Examples of events generated in the mobile terminal include receiving of a call signal, receiving of a message, input of a key signal, input of touch, etc. The alarm module 153 can output signals in forms different from video signals or audio signals, for example, a signal for indicating generation of an event through vibration. The video signals or the audio signals can be also output through the display module 151 or the audio output module 152.

The haptic module 154 generates various haptic effects that the user can feel. A representative example of the haptic effects is vibration. The intensity and pattern of vibration generated by the haptic module 154 can be controlled. For example, different vibrations can be combined and output or sequentially output.

The haptic module 154 can generate a variety of haptic effects including an effect of stimulus according to arrangement of pins vertically moving for a contact skin face, an effect of stimulus according to jet force or sucking force of air through a jet hole or a sucking hole, an effect of stimulus rubbing the skin, an effect of stimulus according to contact of an electrode, an effect of stimulus using electrostatic force and an effect according to reproduction of cold and warmth using an element capable of absorbing or radiating heat in addition to vibrations.

The haptic module 154 can not only transmit haptic effects through direct contact but also allow the user to feel haptic effects through kinesthetic sense of his fingers or arms. The mobile terminal 100 can include at least two haptic modules 154 according to constitution of the mobile terminal.

The memory 160 can store a program for the operation of the controller 180 and temporarily store input/output data (for example, phone book, messages, still images, moving images, etc.). The memory 160 can store data about vibrations and sounds in various patterns, which are output from when a touch input is applied to the touch screen.

The memory 160 can include at least one of a flash memory, a hard disk type memory, a multimedia card micro type memory, a card type memory (for example, SD or XD memory), a random access memory (RAM), a static RAM (SRAM), a read-only memory (ROM), an electrically erasable programmable ROM (EEPROM), a programmable ROM (PROM) magnetic memory, a magnetic disk and an optical disk. The mobile terminal 100 can operate in relation to a web storage performing the storing function of the memory 160 on the Internet.

The interface 170 serves as a path to all external devices connected to the mobile terminal 100. The interface 170 receives data from the external devices or power and transmits the data or power to the internal components of the mobile terminal 100 or transmits data of the mobile terminal 100 to the external devices.

The interface 170 can include a wired/wireless headset port, an external charger port, a wired/wireless data port, a memory card port, a port for connecting a device having a user identification module, an audio I/O port, a video I/O port, an earphone port, etc., for example.

An identification module is a chip that stores information for authenticating the authority to use the mobile terminal 100 and can include a user identify module (UIM), a subscriber identify module (SIM) and a universal subscriber identify module (USIM). A device (referred to as an identification device hereinafter) including the identification module can be manufactured in the form of a smart card. Accordingly, the identification device can be connected to the mobile terminal 100 through a card slot included in the interface 170.

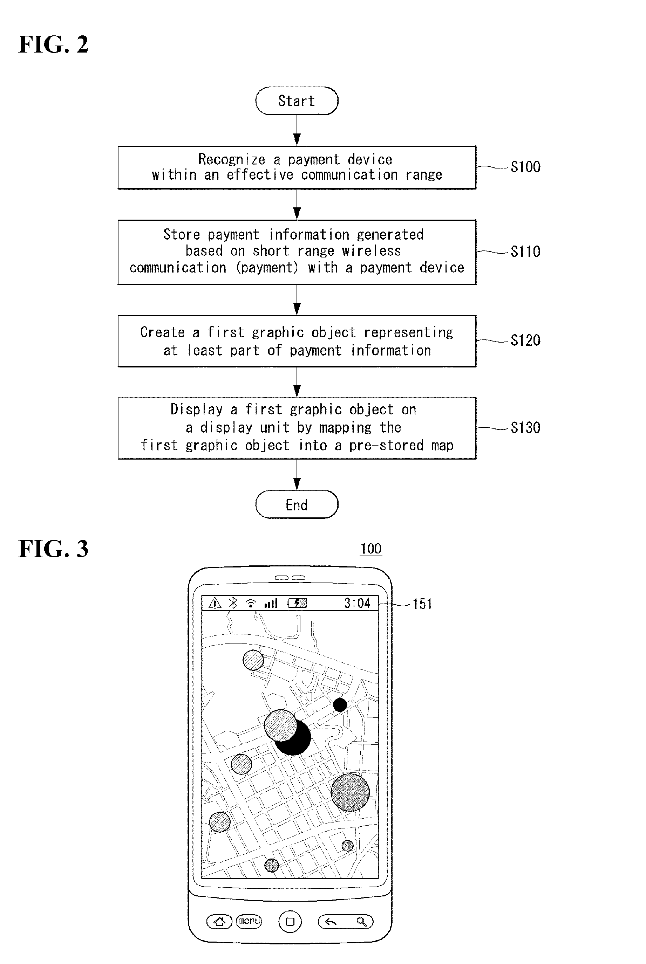

Up to this point, structure of a mobile terminal 100 according to the present invention has been described. With reference to FIGS. 2 to 25, various functions related to payment employing a short range wireless communication technology realized in a mobile terminal 100 according to an embodiment of the present invention described above will be described in more detail below.

FIG. 2 is a flow diagram illustrating a method for providing information about payment carried out a mobile terminal according to the present invention. In what follows, the method for providing payment information will be described with reference to FIGS. 1 and 2.

A short range wireless communication module 114 among wireless communication modules included in a wireless communication unit 110 of the mobile terminal 100 recognizes a payment device within an effective communication range. Then, a wireless communication link is established between the wireless communication unit 110 and the payment device. At this point, the short range wireless communication module 114 can be an NFC module and the payment device can be an NFC reader for carrying out a payment function. But the scope of the present invention is not limited to the above.

If a short range wireless communication link to and from the payment device is established, the controller 180 of the mobile terminal 100 stores in the memory 160 payment information created based on the result of carrying out short range wireless communication with the payment device (namely, based on the result of carrying out payment) S110. The payment information can include the payment location, payment method (e.g., credit card), payment product (including service and tangible product), provider of payment product (e.g., provider name of product sales market), payment amount, payment time, number of payments, etc. However, the scope of the present invention is not limited to the above.

Next, the controller 180 creates a first graphic object representing at least part of the payment information S120, maps the created graphic object into a map pre-stored based on the payment location, and displays the graphic object on a display module 151 of the mobile terminal 100, S130.

FIG. 3 illustrates one example where payment information is displayed on a mobile terminal 100 according to the present invention as a result of carrying out a method for providing payment information illustrated in FIG. 2.

Referring to FIG. 3, a map is displayed on a display module 151 of the mobile terminal 100 and circles of various colors are displayed on the map and sizes of the circles are different from each other. Different colors are used for the respective circles to indicate that payment methods are different from each other whereas different sizes for the circles indicate payment amount differs from each other.

Also, referring to FIG. 3, payment information displayed on a map by the mobile terminal 100 according to the present invention payment type and payment amount. However, the scope of the present invention is not limited to the above. For example, the mobile terminal 100 according to the present invention can display information more or less than that displayed in FIG. 3 by mapping the information on the map.

Therefore, the user can intuitively recognize payment method and payment amount relative to each other according to the payment method by seeing the screen illustrated in FIG. 3.

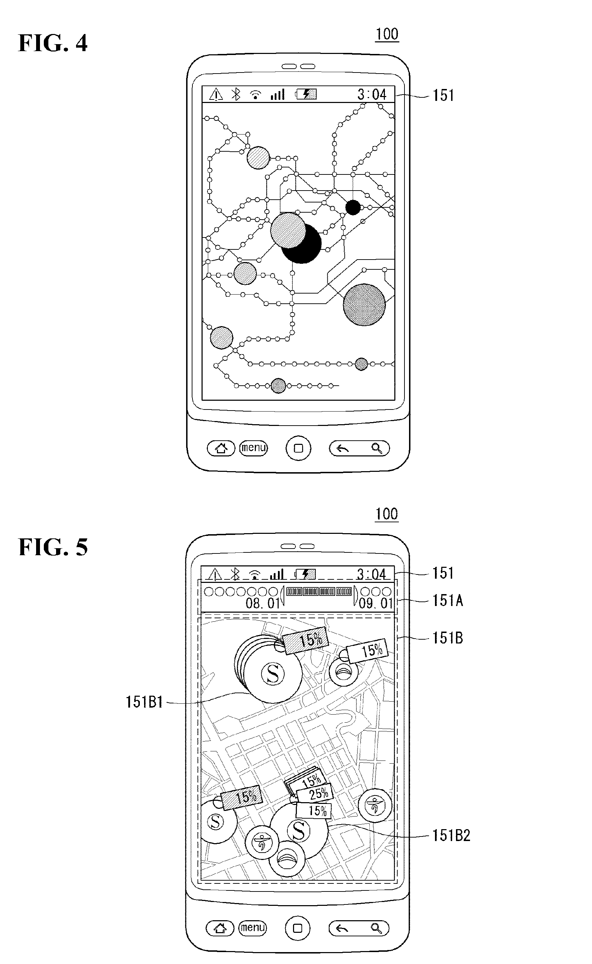

FIG. 4 illustrates another example where payment information is displayed on a mobile terminal 100 according to the present invention as a result of carrying out a method for providing payment information illustrated in FIG. 2.

Referring to FIG. 4, different from the map illustrated in FIG. 3, the map illustrated in FIG. 4 shows circles representing payment amount relative to each other according to payment method displayed on a subway route map. In other words, as shown in FIGS. 3 and 4, the map providing location information included in payment information provided by a mobile terminal 100 according to the present invention can correspond to an actual map, a subway route map, etc. However, the scope of the present invention is not limited to the above. For example, the map used by a mobile terminal 100 according to the present invention can include a bus route map, a rough map of a particular area, etc.

FIG. 5 illustrates yet another example where payment information is displayed on a mobile terminal 100 according to the present invention as a result of carrying out a method for providing payment information illustrated in FIG. 2.

Referring to FIG. 5, as a result of carrying out the method for providing payment information, the display module 151 of the mobile terminal 100 can be divided into a first area 151A showing a time period for which payment information is displayed and an area 151 B where payment information is displayed on a map.

Among payment information displayed in the payment information display area 151 B, some graphic object 151B1 represents the case where payment is repeated at the same payment location with the same card while another graphic object 151B2 represents the case where payment is repeated at the same payment location but with different cards. However, the remaining graphic objects shown in the form of a circle represent the cases where payment is carried out at a single location with a single card.

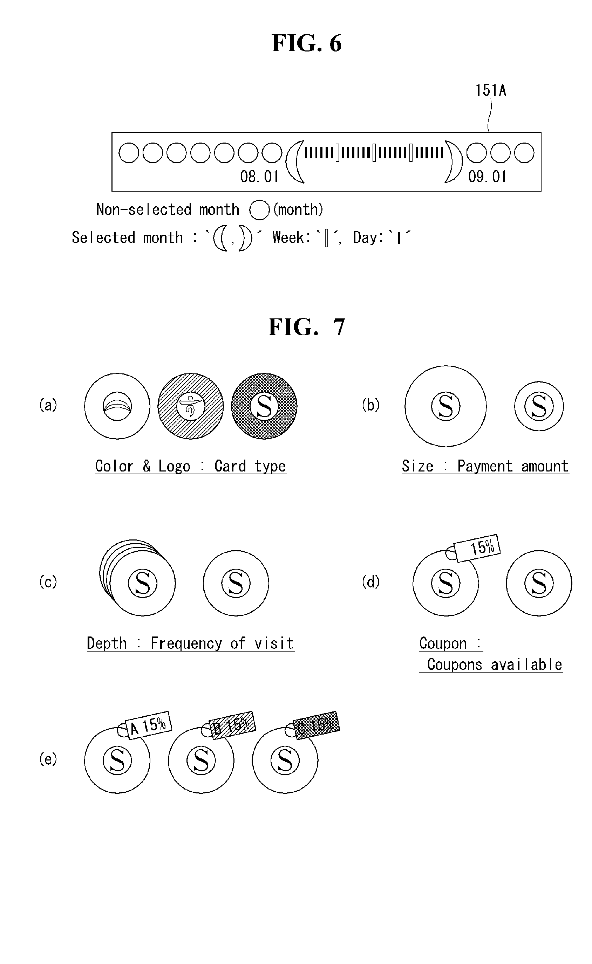

FIG. 6 illustrates an area magnified for setting a unit period by which payment information provided by a mobile terminal 100 according to the present invention illustrated in FIG. 5 is displayed.

Referring to FIG. 6, the payment information illustrated in FIG. 5 represents payment information from Aug. 1 to Sep. 1. In other words, those months not showing payment information are denoted by closed circles whereas the circle corresponding to a selected month is divided into half. The selected month is further divided into weeks and then days between the circles divided. Here, payment information display module can be further selected in units of weeks or days according to the user's selection.

FIG. 7 illustrates examples of graphic objects illustrating payment related information provided by a mobile terminal 100 according to the present invention.

FIG. 7(a) indicates that graphic objects mapped into a map can be varied according to payment methods, namely, card types. FIG. 7(b) illustrates that size of a graphic object mapped into a map can be varied according to payment amount. FIG. 7(c) illustrates that graphic objects can be displayed being overlapped if the frequency of visit to a payment location (namely, the number of payment) accumulates.

FIG. 7(d) illustrates that if a coupon is available at a payment location, a graphic object representing coupon-related information is displayed together with payment related information. FIG. 7(e) illustrates that the color of a graphic object representing coupon-related information can be varied according to the remaining period of use of a coupon available at a payment location.

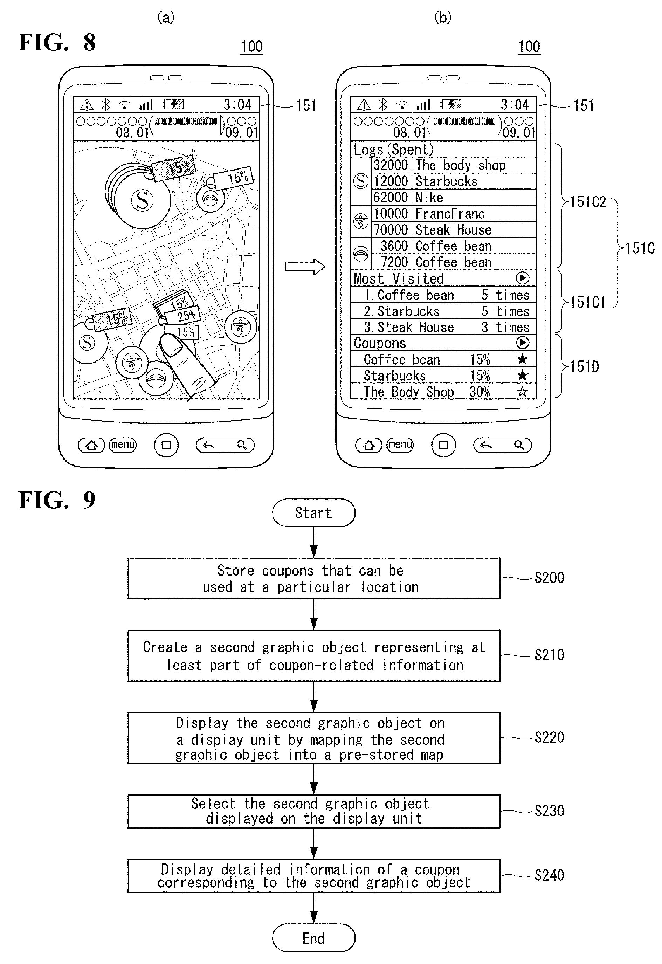

FIG. 8 illustrates a case where, if payment related information displayed on a mobile terminal 100 according to the present invention is selected as a result of carrying out a method for providing payment related information illustrated in FIG. 2, details of payment related information are displayed on the mobile terminal 100.

FIG. 8(a) illustrates that information related to payment carried out by the user by using multiple cards is displayed being mapped to a predetermined map. While in the state illustrated in FIG. 8(a), the user touches a graphic object mapped to a particular payment location. Then, the controller 180 of the mobile terminal 100, as shown in FIG. 8(b), displays on the display module 151 payment related information 151C at the particular payment location and information 151 D related to a coupon available at the payment location. At this point, the payment related information can include the frequency of visit 151C1 to the particular payment location and payment records for the respective card companies 151 C2.

FIG. 9 is a flow diagram illustrating another example of a method for providing payment information carried out a mobile terminal 100 according to the present invention. Hereinafter, the method for providing payment information will be described with reference to related drawings.

First, coupons which can be used at particular locations are stored in the memory 160 of the mobile terminal 100, S200. The controller 180 of the mobile terminal 100 creates S210 a second graphic object representing at least part of the stored information related to coupons and displays the created second graphic object on the display module 151 by matching the graphic object with a pre-stored map S220. Though not shown in FIG. 9, the second graphic object can be displayed on the pre-stored map together with the first graphic object representing payment information described above.

At this point, the pre-stored map can correspond to an actual map, a subway route map, a bus route map, a rough map, etc. The stored information related to coupon can include a discount rate of the coupon, information about shops where the coupon can be used, use period of the coupon, product type for which the coupon can be applied, and so on; the second graphic object can represent only the discount rate of the coupon and products for which the coupon can be used.

The user selects the second graphic object displayed on the display module 151, S230. Then the controller 180 displays detailed information of a coupon corresponding to the second graphic object on the display module 151, S240. Like the coupon display area 151D illustrated in FIG. 8(b), detailed information of a coupon can include the name of shops for which the coupon can be used, discount rate, etc. However, the scope of the present invention is not limited to the above.

As described above, when the second graphic object representing part of coupon related information is displayed at a payment location on a map together with the first graphic object representing part of payment information, detailed information of a coupon corresponding to the second graphic object can be displayed on the display module 151 even if the user selects the first graphic object.

The mobile terminal 100 according to the present invention can carry out a remind function against a stored coupon. The remind function can include reminding of coupons available within a predetermined range with respect to the location of the mobile terminal 100, reminding of coupons satisfying predetermined conditions with respect to an expiration date. However, the remind function for coupons of a mobile terminal 100 according to the present invention is not limited to the above.

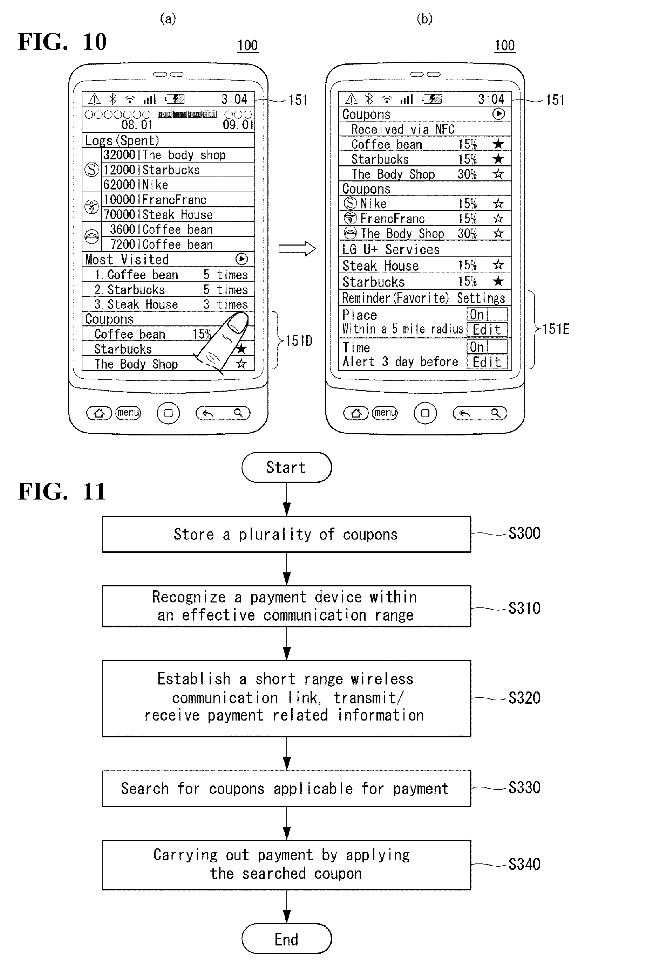

FIG. 10 illustrates a procedure of setting a remind function of a coupon stored in a mobile terminal 100 according to the present invention.

FIG. 10(a) illustrates a case where, if the user touches a particular part of an area where coupon related information is displayed while the coupon related information stored 151D is displayed on the display module 151 of the mobile terminal 100, the display module 151 displays an area 151 E for setting a remind function of a coupon. Referring to the area 151 E, the remind function of the coupon can correspond to reminding of coupons available within a radius of 5 miles from the location of the mobile terminal 100 or reminding of coupons within three days before expiration date.

FIG. 11 is a flow diagram illustrating one example of a payment method using a short range wireless communication technology carried out in a mobile terminal 100 according to the present invention. In what follows, the payment method will be described with reference to related drawings.

First, a plurality of coupons is stored in the memory 160 of the mobile terminal 100, S300. Next, a payment device is recognized within an effective communication range of a short range wireless module 114 included in the wireless communication unit 110, S310. Then, the controller 180 of the mobile terminal 100 establishes a short range wireless communication link with the payment device and transmits/receives payment related information through the short range wireless communication link S320.

For example, the payment related information can include product information transmitted to the payment device from the mobile terminal 100, information about payment method stored in the mobile terminal 100, information about coupons which can be used for a particular product transmitted to the mobile terminal 100 from the payment device, information related to coupons applicable for a particular payment method, and so on.

The controller 180 searches the plurality of coupons stored in the memory 160 for coupons available for payment based on the payment related information S330 and carries out the payment by applying the searched coupon S340.

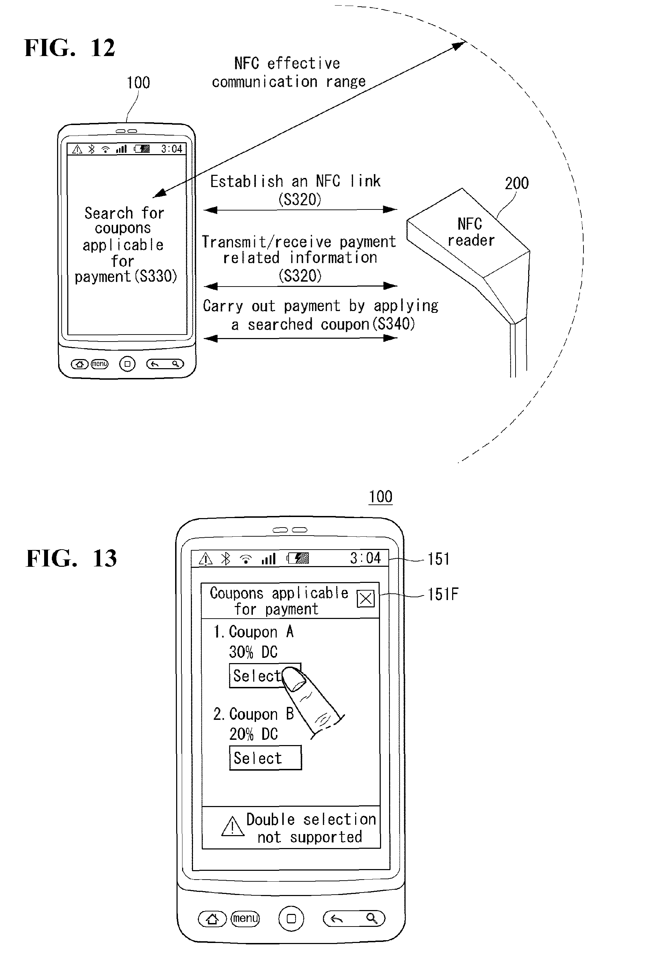

FIG. 12 is one example of a payment method using short range wireless communication method illustrated in FIG. 11. More specifically, FIG. 12 illustrates a procedure through which payment is carried out between a mobile terminal 100 according to the present invention and a payment device 200 including an NFC reader by using an NFC link.

While a plurality of coupons is stored in the mobile terminal 100, an NFC reader 200 is recognized within an NFC effective communication range S320. Then, an NFC link is established between the mobile terminal 100 and the NFC reader 200; and payment related information is transmitted/received through the NFC link S320.

Next, the controller 180 of the mobile terminal 100 searches the plurality of stored coupons for coupons available for payment based on the payment related information S330 and carries out the payment by applying the searched coupon S340.

Though not shown in the figure, if the number of searched coupons is more than one, the controller 180 can apply the coupons satisfying predetermined conditions for the payment. For example, among the searched coupons, the controller 180 can apply a coupon providing the largest discount rate for the payment. Also, the controller 180 can apply a coupon providing the biggest save point for the payment. These examples illustrate the coupon application conditions carried out in a mobile terminal 100 according to the present invention and the scope of the present invention is not limited to the above.

FIG. 12 illustrates an example where a searched coupon is used immediately for payment. Different from the illustration of FIG. 12, however, the user can determine whether to use a searched coupon.

FIG. 13 shows coupons applicable for payment through a mobile terminal 100 according to the present invention, the coupons displayed according to a payment method using a short range wireless communication technology illustrated in FIG. 12.

Referring to FIG. 13, the display module 151 of the mobile terminal 100 displays coupons available for payment and the user can select a coupon for payment by touching the coupon. Moreover, the user can perform payment without using a search coupon by touching a cancel button 151 F.

FIG. 13 shows searched coupons in the descending order of discount rate. However, the controller 180 can also sort the searched coupons in the descending order of provided save points at the time of payment. In other words, the searched coupons can be sorted according to the order set by the predetermined conditions in a user interface screen for selecting searched coupons in the mobile terminal 100 according to the present invention.

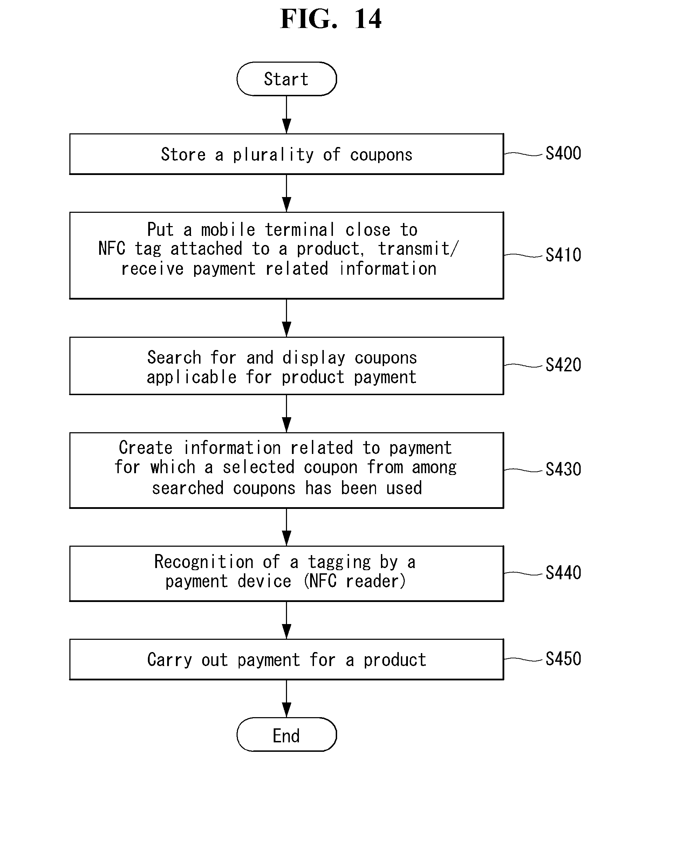

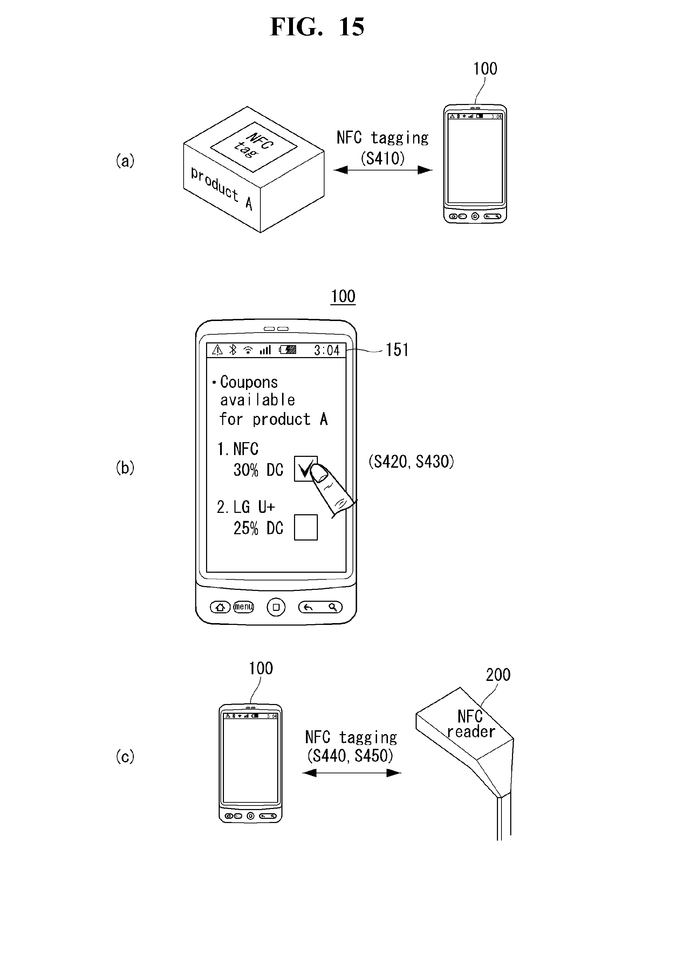

FIG. 14 is a flow diagram illustrating another example of a payment method using a short range wireless communication technology carried out in a mobile terminal 100 according to the present invention. FIG. 15 illustrates one example of a procedure for carrying out a payment method using a short range wireless communication technology illustrated in FIG. 14. Hereinafter, the payment method will be described with reference to related drawings.

First, a plurality of coupons are stored in the memory 160 of the mobile terminal 100, S400. Next, if the user puts the mobile terminal 100 close to an NFC tag attached to a product, an NFC link is formed between the mobile terminal 100 and the NFC; and payment related information is transmitted/received through the NFC link formed S410. At this point, the payment related information can include product information transmitted from the NFC tag to the mobile terminal 100, information about a coupon applicable to the product, payment related information transmitted from the mobile terminal 100 to the NFC tag, information related to the mobile terminal 100, etc.

Next, the controller 180 searches for coupons available for payment of the product and displays the searched coupons on the display module 151. If the user selects a particular coupon in the state described above, the controller 180 generates information related to payment for which the coupon selected by the user is applied from among the searched coupons S430.

Next, tagging of a payment device (NFC reader) against the mobile terminal 100 is recognized S440. Then the controller 180 carries out payment about the product based on the generated payment related information.

To summarize the description above provided with reference to FIGS. 11 to 15, a mobile terminal 100 according to the present invention can carry out a function of searching for and applying a coupon that can be used for payment of a particular product from among coupons stored in the memory 160 based on communication of payment related information between the wireless communication unit 110 and a tag or a payment device capable of forming a short range wireless communication link.

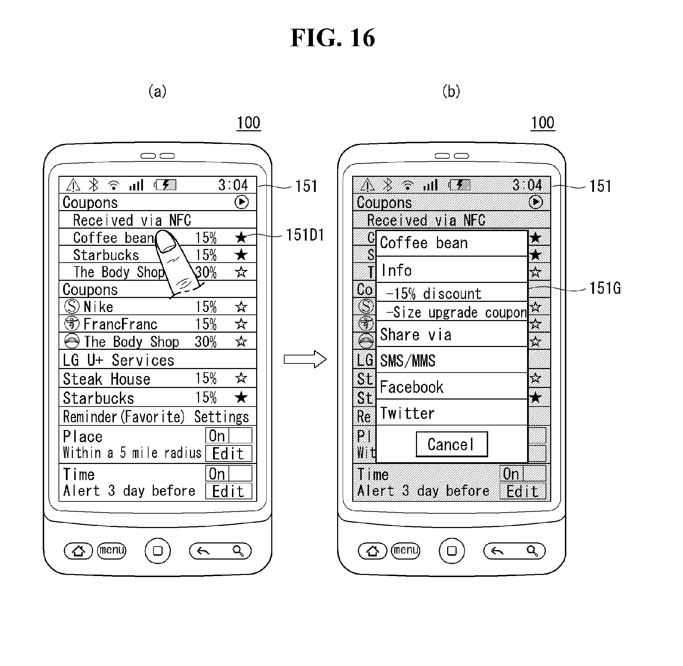

FIG. 16 illustrates one example of a procedure for transmitting a coupon stored in a mobile terminal 100 according to the present invention to an external device.

FIG. 16(a) illustrates a case where an area 151 D corresponding to a particular coupon displayed on a display module 151 is selected. As shown in FIG. 16(b), the controller 180 of the mobile terminal 100 displays more detailed information about the coupon on the display module 151 and at the same time, displays on the display module 151 a user interface screen for transmitting the coupon to another external device through a wireless communication unit 110. Referring to FIG. 16(b), not only SMS/MMS but also SNS service such as facebook or twitter can be used as a method for transmitting the coupon to an external device.

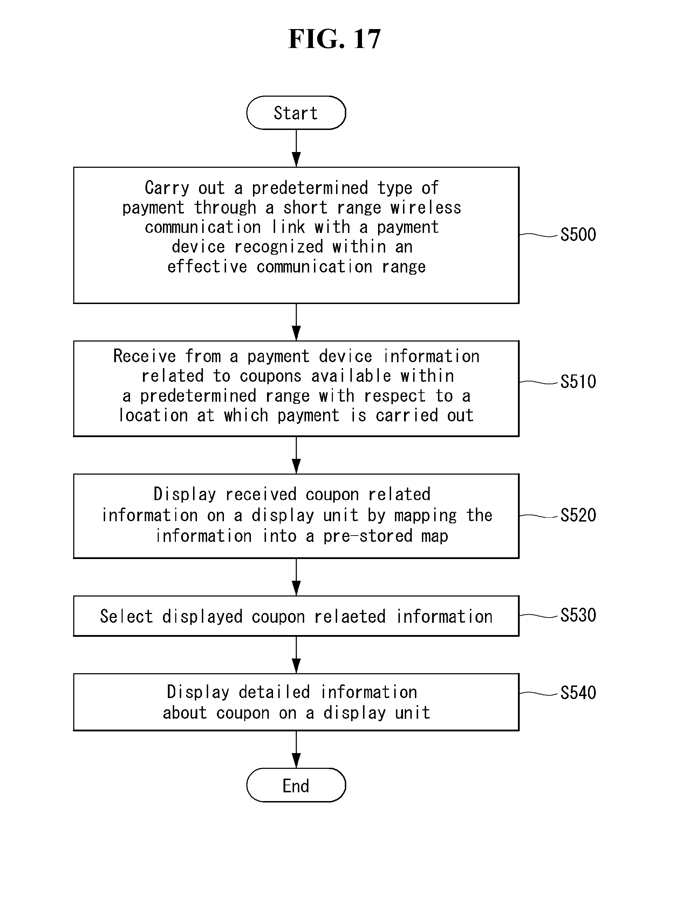

FIG. 17 is a flow diagram illustrating one example of a method for recommending a coupon at the time of carrying out payment based on a short range wireless communication technology, which is carried out in a mobile terminal 100 according to the present invention. In the following, the method for recommending a coupon will be described with respect to related drawings.

Predetermined types of payment are carried out through a short range wireless communication link with a payment device located within an effective communication range S500. At this point, the predetermined types of payment indicate predetermined payment such that a coupon search function is carried out for a neighborhood of payment location at the time of payment. For instance, payment for a transportation means such as payment of subway fare, bus fare, taxi fare, and the like is a prototypical example of the predetermined type of payment. However, the scope of the present invention is not limited to the above. Also, types of payment can be set up and changed by the user.

As payment is performed by the payment device, the mobile terminal 100 receives from the payment device information related to coupons that can be used within a predetermined range with respect to a location at which the payment is carried out S510. At this time, the coupon, too, can be received from the payment device together with information related to the coupon.

Then the controller 180 maps information related to the received coupon into a pre-stored map and displays the information on the display module 151, S520. Next, the user selects information related to the coupon displayed on the display module 151, S530. Then the controller 180 displays detailed information about the coupon on the display module 151, S540.

If the coupon is not received together with information related to the coupon, the controller 180 can receive the coupon from a network device providing coupons. At this point, a network device providing coupons can be a server distributing coupons throughout the Internet or a device distributing coupons though a short range wireless communication link such as ZigBee, Bluetooth, and the like.

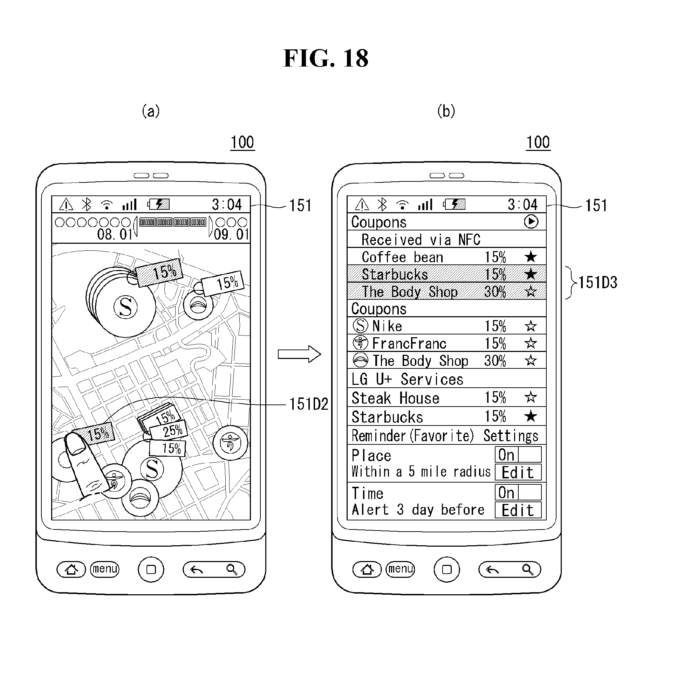

FIG. 18 illustrates a procedure for displaying detailed information about a selected coupon on a mobile terminal 100 according to the present invention if information related to the coupon displayed on the mobile terminal 100 is selected as a result of carrying out a method for recommending a coupon illustrated in FIG. 17.

FIG. 18(a) illustrates a case where a plurality of coupon-related information is displayed according to a method for recommending a coupon illustrated in FIG. 17, together with graphic objects corresponding to payment related information. While in the state illustrated in FIG. 18(a), the user touches and selects information 151D2 related to a particular coupon. Then, as shown in FIG. 18(b), the controller 180 of the mobile terminal 100 can display detailed information 151D3 of a coupon corresponding to selected coupon-related information 1512D on the display module 151.

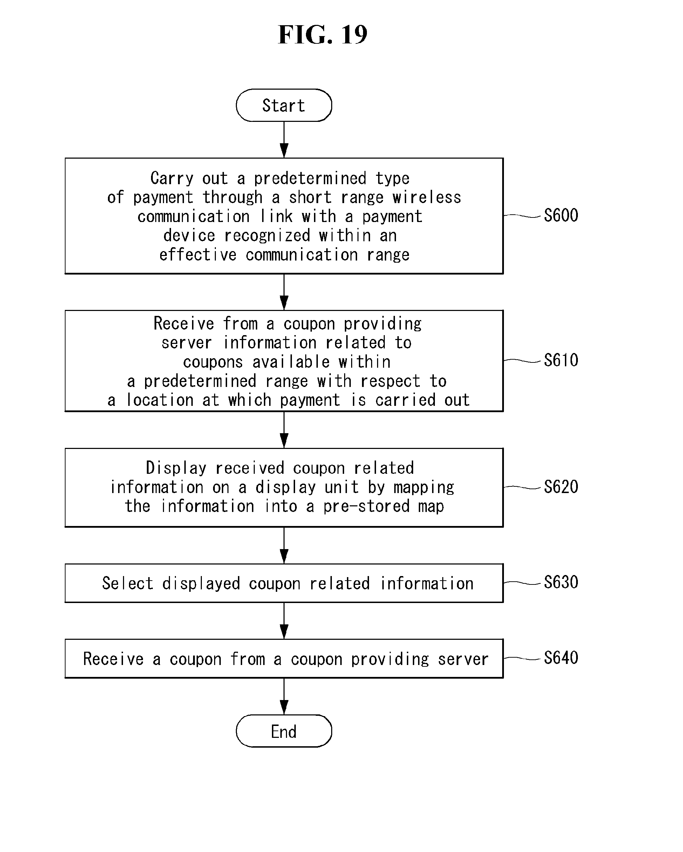

FIG. 19 is a flow diagram illustrating another example of a method for recommending a coupon at the time of carrying out payment based on a short range wireless communication technology, which is carried out in a mobile terminal according to the present invention. In the following, the method for recommending a coupon will be described with reference to related drawings.

A predetermined type of payment is carried out through a short range wireless communication link with a payment device recognized within an effective communication range S600. If payment is carried out by the payment device, the mobile terminal 100 receives from a coupon providing server information related to coupons available within a predetermined range with respect to a location at which the payment is carried out S610.

Then the controller 180 maps the received information related to coupons into a pre-stored map and displays the received information on the display module 151, S620. Next, the user selects the information related to coupons displayed on the display module 151, S630. Then the controller 180 receives the coupon from the coupon providing server S640. Different from what is illustrated in FIG. 19, it should be noted that the coupon can also be received from the coupon providing server directly after the predetermined type of payment is carried out.

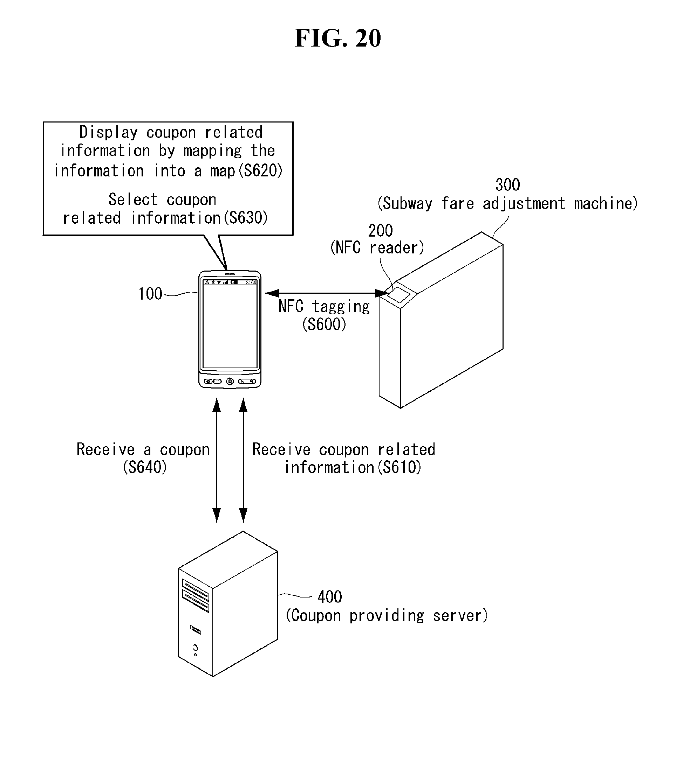

FIG. 20 illustrates one example of a method for recommending a coupon of FIG. 19 carried out based on NFC. First, the user puts a mobile terminal 100 according to the present invention close to an NFC reader 200 included in a subway fare adjustment machine 300, S600. Then, payment of subway fare is carried out between the mobile terminal 100 and the subway fare adjustment machine 300.

Then, the mobile terminal 100 receives information related to coupons from a coupon providing server 400, S610; displays the received information related to coupons by mapping the information into a map S620; and recognizes the user's selection of information related to coupons displayed being mapped into the map S630. Then, the mobile terminal 100 receives a coupon from the coupon providing server 400, S640.

According to a method for recommending a coupon of a mobile terminal 100 according to the present invention described above with reference to FIGS. 17 to 20, if a predetermined type of payment is carried out based on short range wireless communication, the mobile terminal 100 can receive information related to coupons from a payment device or a separate network device and display the information by mapping the information into a predetermined map. At this time, a coupon can be received from the payment device or the network device at the time of carrying out the predetermined type of payment. Also, the coupon can be received from the network device if information related to a coupon mapped into the predetermined map is selected.

FIG. 21 is a flow diagram illustrating one example of a method for restricting payment using a short range wireless communication technology in a mobile terminal 100 according to the present invention. In what follows, the method for restricting payment will be described with reference to related drawings.

First, predetermined payment restriction conditions for restricting payment carried out in the mobile terminal 100 are stored in a memory 160, S700. While in the state above, a short range wireless communication link is established with a payment device recognized within an effective communication range S710.

Then, the controller 180 of the mobile terminal 100 determines whether payment related information communicated through the short range wireless communication link corresponds to the predetermined payment restriction conditions S720. If the payment related information corresponds to predetermined payment restriction conditions S730, the controller 180 carries out a predetermined authentication procedure S740 and if the authentication succeeds S750, the payment procedure is continued to be completed S760.

FIG. 22 illustrates one example where a user authentication procedure is performed in a mobile terminal 100 of the present invention according to a method of restricting payment illustrated in FIG. 21. FIG. 22(a) illustrates a case where the user selects proceeding payment if payment amount corresponds to restriction conditions. Then, the controller 180 of the mobile terminal 100, as shown in FIG. 22(b), carries out a procedure of asking predetermined questions and checking the corresponding answers for user authentication. At this time, the user authentication procedure can employ a procedure of checking a predetermined password, checking a predetermined pattern-lock, etc. However, the scope of the present invention is not limited to the above.

FIG. 23 illustrates cases where user authentication is needed according to a method for restricting payment illustrated in FIG. 21. FIG. 23(a) illustrates to a case where restriction conditions correspond to payment product providers. FIG. 23(b) illustrates a case where restriction conditions correspond to payment amount. At this point, the payment restriction conditions can include not only payment product providers and payment amount as shown in FIGS. 22 and 23, but also payment time, payment location and payment products. However, the scope of the present invention is not limited to the above.

FIG. 24 illustrates a procedure for setting payment related information provided for the user by a mobile terminal 100 according to the present invention. FIG. 25 illustrates examples of payment related information types displayed on a display module 151 in a mobile terminal 100 according to the present invention.

FIG. 24(a) illustrates a case where the user touches a menu setting area and executes a menu setting function while graphic objects corresponding to payment information and coupon related information are displayed on a pre-stored map. Then, as shown in FIG. 24(b), the controller 180 of the mobile terminal 100 displays on the display module 151 a plurality of sub-menus that can be set up.

The user touches a sub-menu area for setting a map style while in the state illustrated in FIG. 24(b). Then, the controller 180, as shown in FIG. 24(c), displays a plurality of setting areas for setting a map style on the display module 151. Referring to FIG. 24(c), the setting area includes settings for view type, circle radius, display style, overlap style, and so on.

The user can select a map type into which various kinds of information are mapped from a map or a subway route map through selection of view type. Also, the user can determine the radius of a map into which information is displayed by setting circle radius. Referring to FIGS. 25(a) to (c), the shape in which payment information is displayed can be circular or rectangular.

Also, if information is mapped being overlapped into the same location, the user can display each information by changing the ratio of the corresponding figure or by piling one of a plurality of figures representing individual information on another. Referring to FIGS. 25 (a) and (b), a circle or a rectangle is divided into a plurality of areas corresponding to payment cards. Referring to FIG. 25(c), it can be known that circles corresponding to the respective payment cards are displayed being overlapped with each other.

Each method carried out in a mobile terminal 100 according to the present invention by using a short range wireless communication technology can be recorded in a computer-readable medium being implemented in the form of a program that can be carried out through various computer means.

The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal, comprising:
a memory (160);
a display module (151);
a wireless communication unit (110) configured to carry out short range wireless communication with a payment device (200); and
a controller (180) configured to
- store payment information created based on short range wireless communication with the payment device,
- create a first graphic object representing at least part of the payment information, and
- display on the display module the first graphic object by mapping the first graphic object into a map pre-stored based on a payment location included in the payment information.

2. The mobile terminal of claim 1, wherein the controller (110) is configured to display the payment information on the display module (151) or display information related to coupons stored in the memory (160) and available at the payment location if the first graphic object is selected.

3. The mobile terminal of claim 1 or 2, wherein the memory (160) is further configured to store coupons available at the particular location and the controller (180) is configured to create a second graphic object representing at least part of the coupon related information and display the second graphic object on the display module (151) by mapping the second graphic object into the pre-stored map based on the particular location.

4. The mobile terminal of claim 3, wherein the controller (180) is configured to display detailed information about the coupon on the display module (151) if the second graphic object is selected.

5. The mobile terminal of claim according to any one of the preceding claims, wherein the controller (180) is configured to display on the display module (151) coupons available within a predetermined range from a location of the mobile terminal or related information of a coupon satisfying predetermined conditions based on a use period allowed.

6. The mobile terminal of claim according to any one of the preceding claims, comprising:
a memory (160) configured to store a plurality of coupons;
a wireless communication unit (110) configured to establish a short range wireless communication link between a payment device (200) and tags recognized within an effective communication range; and
a controller (180) configured to search the plurality of coupons for a coupon that can be used for payment based on payment related information communicated through the short range wireless communication link and perform the payment by using the searched coupon.

7. The mobile terminal according to any one of the preceding claims, wherein the controller (180) is configured to display on a display module (151) a user interface screen for determining whether to apply the searched coupon for the payment.

8. The mobile terminal according to any one of the preceding claims, wherein the controller (180), from among the search coupons, is configured to apply coupons satisfying predetermined conditions for the payment.

9. The mobile terminal of according to any one of claims, wherein the controller (180), from among the plurality of coupons, is configured to display on a display module (151) information related to coupons available within a predetermined range from a location of the mobile terminal (100) or satisfying predetermined conditions based on allowed use period.

10. The mobile terminal of claim according to any one of the preceding claims, comprising:
a display module (151);
a wireless communication unit (110) configured to establish a short range wireless communication link with a payment device (200) and form a wireless communication link with a network device providing coupons; and
if predetermined type of payment is carried out by using a payment device (200) recognized within an effective communication range through the short range wireless communication link, a controller (180) configured to receive, through the payment device (200) or the network device, information related to coupons that can be used within a range predetermined with respect to a location at which the payment has been performed; and configured to display on the display module (151) the information related to the coupons by mapping the information related to the coupons to a pre-stored map.

11. The mobile terminal of claim 10, wherein the controller (180), if the predetermined type of payment is carried out, is configured to receive from the payment device (200) or the network device a coupon available within the predetermined range with respect to the location at which the payment is carried out and store the coupon in a memory (160).

12. The mobile terminal of claim 10 or 11, wherein the controller (180), if the information related to the coupons displayed on the display module (151) is selected, is configured to receive from the network device a coupon corresponding to the selected information and store the received coupon.

13. The mobile terminal as claimed in any one of claims 10-12, wherein the controller (180), if the information related to the coupons displayed on the display module (151) is selected, is configured to display detailed information related the coupons.

14. The mobile terminal of claim according to any one of the preceding claims, comprising:
a memory (160) configured to store predetermined payment restriction conditions;
a wireless communication unit (110) configured to establish a short range wireless communication link with a payment device (200) recognized within an effective communication range; and
a controller (180) configured to carry out a predetermined authentication process if payment related information communicated through the short range wireless communication link corresponds to the predetermined payment restriction conditions.

15. The mobile terminal of claim 14, wherein the predetermined payment restriction conditions include at least one of payment amount, payment time, payment product, payment product providers, and payment locations.
